# EUROPÄISCHE PATENTSCHRIFT

(11) **EP 2 611 613 B1**
(45) Veröffentlichungstag und Bekanntmachung des Hinweises auf die Patenterteilung: **04.03.2015**
(21) Anmeldenummer: 11761292.9
(22) Anmeldetag: 16.08.2011
(51) Int. Cl.: B32B 33/00, B41M 3/14, B29C 39/14, B41M 5/52, B32B 38/14, B41M 5/00, B29C 47/00, B42D 25/00, B32B 38/06, B32B 38/00

(54) **VERFAHREN ZUR HERSTELLUNG EINES SICHERHEITSDOKUMENTS MIT EINER MIKROPORÖSEN LAMINIERFÄHIGEN DRUCKFOLIE UND SICHERHEITSDOKUMENT**
METHOD FOR PRODUCING A SECURITY DOCUMENT WITH MICROPOROUS LAMINATABLE PRINTLAYER, AND SUCH A DOCUMENT
PROCÉDÉ DE PRODUCTION D'UN DOCUMENT DE SÉCURITÉ À L'AIDE D'UN FILM D'IMPRESSION MICROPOREUX STRATIFIABLE, ET DOCUMENT DE SÉCURITÉ

(30) Priorität: 30.08.2010 DE 102010035890
(43) Veröffentlichungstag der Anmeldung: 10.07.2013
(73) Patentinhaber: Bundesdruckerei GmbH, 10969 Berlin (DE)
(72) Erfinder: KRÜGER, Per, 14197 Berlin (DE); MOMBRÉE, Alexander, 10829 Berlin (DE); SEIDEL, Rainer, 13467 Berlin (DE); KNEBEL, Michael, 10405 Berlin (DE); EHREKE, Jens, 12587 Berlin (DE); DITTRICH, Harald, 10119 Berlin (DE); GUTMANN, Roland, 14612 Falkensee (DE)
(74) Vertreter: Patentanwälte Bressel und Partner mbB
(86) Internationale Anmeldenummer: PCT/EP2011/064082
(87) Internationale Veröffentlichungsnummer: WO 2012/028451

(56) Entgegenhaltungen:
- WO-A1-2008/058331
- GB-A- 565 708
- US-A- 4 544 183

## Beschreibung

Die Erfindung betrifft ein Verfahren zur Herstellung eines Sicherheitsdokuments, zu dessen Herstellung mindestens eine Folie aus einem Kunststoffmaterial verwendet wird, die in mindestens einem Bereich flächig bedruckt, vorzugsweise vollfarbig bedruckt wird. Ferner betrifft die Erfindung ein Sicherheitsdokument mit einer zumindest in einem Bereich flächig bedruckten Kunststoffschicht.

Aus dem Stand der Technik sind Sicherheitsdokumente bekannt, in die optisch wahrnehmbare Informationen kodiert sind. Ein häufig verwendetes Verfahren, welches die Informationen im Inneren eines aus einem Kunststoffmaterial bestehenden Dokumentenkörpers speichert, ist ein so genanntes Lasermarkierungsverfahren. Einzelnen Folien, die zu einem Dokumentenkörper des Sicherheitsdokuments zusammengefügt werden, insbesondere in einem Laminationsverfahren zusammengefügt werden, werden Pigmente zugefügt, die eine Absorption von fokussiertem Laserlicht begünstigen. Mittels fokussierten Laserlichts ist es dann möglich, lokal eine Absorption in dem Dokument und hierüber eine Karbonisierung des Kunststoffs im Innern des Dokumentenkörpers zu erreichen. Hierüber können Schwarz-Weiß- und Graustufenabbildungen in Sicherheitsdokumenten kodiert werden. Vermehrt besteht jedoch das Bedürfnis, Informationen auch farbig zu kodieren.

Aus der EP 0 190 997 B1 ist ein Laserbeschriftungsverfahren bekannt, bei dem mittels Laserlichts eine Verfärbung eines einem Substrat eines Sicherheitsdokuments zugefügten Zusatzstoffs bewirkt wird, welcher mindestens ein organisches oder anorganisches Pigment und/oder einen polymerlöslichen Farbstoff umfasst. Die Beschriftung wird ohne eine für das menschliche Auge erkennbare Beschädigung ausgeführt. Für eine vollfarbige Informationsspeicherung konnte sich dieses Verfahren nicht durchsetzen, da bislang keine entsprechenden, eine ausreichende Langzeitstabilität aufweisende Pigmente aufgefunden werden konnten, die einen Farbraum, beispielsweise einen RGB-Farbraum, aufspannen.

Aus der EP 1 144 201 B1 ist ein fälschungssicheres Dokument bekannt, das ein Sicherheitsmerkmal in Form eines Perforationsmusters aufweist. Das Dokument umfasst unterschiedlich farbige Materialschichten, so dass eine Farbe in Abhängigkeit von der Tiefe der Perforation wählbar ist. Sicherheitsdokumente, die nach diesem Verfahren hergestellt sind, weisen jedoch häufig eine nicht befriedigende Bildqualität auf, sofern als Information beispielsweise ein farbiges Gesichtsbild in das Sicherheitsdokument kodiert werden soll.

Aus der GB 565 708 A sind Banknoten und andere Wertgegenstände bekannt. Diese weisen nach einer Ausführungsform zwei übereinander gefügte flexible Schichten aus nicht brennbarem wasserbeständigen Plastikmaterial auf, die permanent miteinander verbunden sind, wobei mindestens eine der überlagerten Schichten an einer Seite, mit der diese mit der anderen Schicht verbunden wird, Einsenkungen aufweist, die gemeinsam die Form einer Zahl oder eines Bildes zeigen und mit einem Material gefüllt sind, dessen Farbe von der Farbe des Materials der Schicht abweicht.

Aus der US 4,544,183 A ist eine mehrlagige gravierte Identifikationskarte bekannt, die eine Basisschicht mit einer ersten Farbe und eine farbveränderliche Schicht aufweist, die zuerst eine zweite Farbe aufweist, die in eine dritte Farbe überführt werden kann und einen Kontrast zu der ersten Farbe nach einer Bestrahlung mit einer Strahlung zeigt, die eine Wellenlänge zwischen 3500 Å und 5000 Å aufweist. Die farbveränderliche Schicht besteht aus einer Lösung eines Kunstharzes, eines Weichmachers, eines strahlungsempfindlichen Agens, der die Farbänderung auslöst, und eines Lösungsmittels, mit dem sowohl der Harz als auch das Material der Basisschicht lösbar ist. Bei einer Ausführungsform wird die Gravur in die Basisschicht eingebracht und diese anschließend mit der farbveränderlichen Schicht gefüllt.

Aus der WO 2008/058331 A1 ist ferner ein Verfahren zum Absichern eines Sicherheitsdokuments gegen Fälschungen bekannt, mit dem ein Sicherheitselement eingebracht wird, welches ein verdecktes Fouriermuster umfasst. Das Fouriermuster wird über ein Tiefenprofil in das Dokument eingebracht.

Aus dem Stand der Technik ist es ferner bekannt, einzelne Schichten vor dem Laminieren mittels eines Druckverfahrens zu bedrucken. Es hat sich jedoch gezeigt, dass Sicherheitsdokumente, bei denen solche flächig bedruckten Folien miteinander in einem Laminationsverfahren zu einem Dokumentenkörper zusammengefügt werden, im Bereich der flächig ausgebildeten Bedruckung eine Schwachstelle gegenüber einer Delamination, d.h. einem Trennen der den Dokumentenkörper bildenden Folien, aufweisen. Die zum Drucken verwendete Tinte bildet hierbei eine Trennschicht, durch die hindurch die Basismaterialien der Folien, aus denen der Dokumentenkörper hergestellt ist, nicht miteinander verbunden sind.

Der Erfindung liegt somit die Aufgabe zugrunde, ein Verfahren zur Herstellung eines Sicherheitsdokuments und ein Sicherheitsdokument zu schaffen, die zumindest einen flächig ausgedehnten bedruckten Bereich ausbilden oder aufweisen und dennoch eine hohe Fälschungssicherheit schaffen oder bieten, insbesondere sofern die bedruckte Kunststofffolie mit anderen Folien zu einem Dokumentenkörper zusammengefügt ist oder wird.

### Grundidee der Erfindung

Der Erfindung liegt die Idee zugrunde, mindestens eine Folie aus einem Kunststoffmaterial so herzustellen oder bereitzustellen, dass mindestens eine Oberfläche Kavitäten zum Aufnehmen einer für die Bedruckung verwendeten Tinte erhält und/oder aufweist. Ein entsprechendes Sicherheitsdokument zeichnet sich dadurch aus, dass die aufgedruckte Tinte im Wesentlichen in Kavitäten angeordnet ist, die in der die mindestens eine Kunststoffschicht bildenden Folie ausgebildet sind. Allgemein ausgedrückt wird eine Folie für die Bedruckung hergestellt und/oder verwendet, die eine gewisse Porosität aufweist. Ein Vorteil besteht darin, dass die Tinte beim Drucken in die Kavitäten der Oberfläche eindringen kann. Bei einer Reihe von Druckverfahren wird so eine gesteigerte Lokalisierung der aufgebrachten Tinte erreicht, da diese nicht auf einer, wie es sonst üblich ist, glatten Oberfläche der Kunststofffolie "verlaufen" kann. Hierdurch wird die Anzahl der verwendbaren Zusammensetzungen für Tinten und anwendbaren Druckverfahren deutlich erhöht. Ein weiterer Vorteil besteht darin, dass die mindestens eine Folie im Bereich einer flächig ausgebildeten Bedruckung besser mit einer angrenzenden Folie in einem Laminationsprozess zusammengefügt werden kann.

Vorteilhaft ist, dass somit sicher auch Tinten eingesetzt werden können, welche Pigmente aufweisen, welche zum Beispiel aufgrund ihrer Größe und/oder Polarität nicht in die Kunststofffolie eindiffundieren können. Ebenfalls können Lösemittel für die Tinte verwendet werden, welche in die Kunststofffolie eindringen können oder diese nur benetzen. Somit können deutlich mehr Tinten eingesetzt werden.

Eine eine poröse Oberfläche aufweisende Folie wird bei einem erfindungsgemäßen Verfahren mittels eines Gießverfahrens hergestellt, bei dem die Folie durch in dem Herstellungsprozess auftretende Prozessgase strukturiert wird. Dieses kann durch eine geeignete Wahl der Umgebungsparameter beim Gießen der Folie oder durch gezielt zugegebene Zusatzstoffe erreicht werden. Bei einem Gießverfahren, wird das Polymermaterial beispielsweise aufgeschmolzen und auf eine Walze oder Fläche in geschmolzenem Zustand aufgebracht. Insbesondere durch eine gezielte Kontrolle der Temperatur kann erreicht werden, dass die austretenden Prozessgase quasi in der sich bildenden Folie "eingefroren" werden und so die mindestens eine Folie strukturieren.

Hierbei wird das Gießverfahren so ausgebildet, dass die Prozessgase eine porös ausgebildete Oberfläche bilden. Dies bedeutet, dass offene Kavitäten in der Oberfläche ausgebildet werden oder sind.

### Definitionen

Als Sicherheitsdokumente werden all jene Dokumente bezeichnet, die über mindestens ein Merkmal verfügen, welches eine Nachahmung und/oder Verfälschung des Dokuments erschwert oder gänzlich unmöglich macht. Sicherheitsdokumente umfassen beispielsweise Identitätsdokumente wie Reisepässe, Personalausweise, Zugangsberechtigungsausweise, Führerscheine, aber auch Etiketten, Tickets, sowie Dokumente, die einen Wert verkörpern wie Postwertzeichen, Banknoten, Aktien oder auch Kredit- und Geldkarten, Telefonkarten, um nur einige beispielhaft zu erwähnen.

Als Sicherheitsmerkmale werden solche Merkmale bezeichnet, die ein Nachahmen und/oder Verfälschen eines Dokuments unmöglich machen oder erschweren. Körperliche Entitäten, die ein Sicherheitsmerkmal darstellen oder umfassen, werden als Sicherheitselemente bezeichnet. Gemäß dieser Definition stellt auch jedes Sicherheitsdokument ein Sicherheitselement dar.

Als farbig wird etwas angesehen, wenn dieses einen Farbeindruck bei einem menschlichen Betrachter gegebenenfalls nach einer Anregung hervorruft. Als mehrfarbig wird eine Information angesehen, wenn sie mindestens zwei für einen Betrachter unterscheidbare Farbeindrücke hervorruft, wobei Helligkeitsunterschiede keine unterschiedlichen Farbeindrücke darstellen sollen. Als bunt wird eine Information angesehen, wenn sie mehr als drei verschiedene Farbeindrücke hervorruft. Als vollfarbig wird ein Gegenstand angesehen, der eine Vielzahl unterschiedlicher Farbeindrücke eines Farbraumes (Gamut) bei einem menschlichen Betrachter hervorruft. Vorzugsweise wird mindestens ein Farbeindruck durch eine additive Farbmischung (bei lumineszierenden Farbmitteln) bzw. eine subtraktive Farbmischung (bei so genannten Körperfarben) aus Grundfarben, die einen Farbraum aufspannen, hervorgerufen. Schwarz- und Graustufen werden hier als eine Farbe angesehen.

Als Tinten werden alle mittels eines Druckverfahrens auf ein Substrat aufbringbaren Zubereitungen verstanden. Farbige Tinten sind somit Zubereitungen, die ein Farbmittel umfassen und im verdruckten Zustand bei einem menschlichen Betrachter, gegebenenfalls nach einer Anregung bei lumineszierenden Farbmitteln, einen Farbeindruck hervorrufen.

Als Folien werden dünne Kunststoffschichten angesehen, deren Materialstärke wesentlich geringer als deren flächige Ausdehnung ist. Als Kunststoffmaterialien zum Ausbilden der Folien kommen insbesondere solche in Betracht, welche auf Basis eines Polymerwerkstoffs aus der Gruppe umfassend PC (Polycarbonat), insbesondere Bisphenol-A-Polycarbonat, PET (Polyethylenterephthalat), PMMA (Polymethylmethacrylat), TPU (thermoplastische Polyurethanelastomere), PE (Polyethylen), PP (Polypropylen), PI (Polyimid oder Polytransisopren), ABS (AcrylnitrilButadien-Styrol), PVC (Polyvinylchlorid) und Kopolymeren solcher Polymere gebildet sind.

Als Dokumentenkörper wird eine körperliche Einheit angesehen, die ein Sicherheitselement darstellt, beispielsweise in Form eines Sicherheitsdokuments oder, beispielsweise im Falle eines Passbuchs, in Form einer Seite eines Sicherheitsdokuments. Als Sicherheitsdokument werden hier in diesem Sinne auch solche Entitäten aufgefasst, die erst nach einer abschließenden Personalisierung und/oder Individualisierung, beispielsweise durch ein Lasergravurverfahren, endgültig an einen Benutzer ausgegeben werden.

Sicherheitsdokumente können eine Vielzahl von unterschiedlichen Sicherheitsmerkmalen und Sicherheitselementen, wie sie im Stand der Technik bekannt sind, beispielsweise Hologramme, elektronische Schaltungen, beispielsweise Mikrochips, Metallfäden, usw. umfassen.

Als Kavitäten werden Volumina in einem Material angesehen, die hohl oder ganz oder teilweise mit einem anderen Material gefüllt sind. Die Volumina müssen zumindest teilweise von dem einen Material umgrenzt, jedoch nicht vollständig von diesem einen Material umschlossen sein sind. Öffnungen, Ausnehmungen und Vertiefungen in einer Oberfläche stellen Kavitäten dar. Als Mikrokavitäten werden Kavitäten bezeichnet, deren Abmessungen im Bereich von 100 nm bis 1 mm, insbesondere im Bereich 1 µm bis 500 µm liegen.

### Bevorzugte Ausführungsformen

Insbesondere wird ein Verfahren zur Herstellung eines Sicherheitsdokuments vorgeschlagen, welches die Schritte umfasst: Bereitstellen und/oder Herstellen mindestens einer Folie aus einem Kunststoffmaterial; und flächiges Bedrucken mindestens eines Bereichs mindestens einer Oberfläche der mindestens einen Folie unter Verwendung von Tinte; wobei die mindestens eine Folie bereitgestellt und/oder hergestellt wird, sodass die mindestens eine Oberfläche Kavitäten zum Ausnehmen der Tinte enthält und/oder aufweist, wobei die mindestens eine Folie mittels eines Gießverfahrens hergestellt wird oder ist, bei dem die Folie durch im Herstellungsprozess auftretende Prozessgase strukturiert wird und die mindestens eine Oberfläche durch austretende Prozessgase porös ausgestaltet wird oder ist. Entsprechend wird ein Sicherheitsdokument vorgeschlagen, welches einen Dokumentenkörper, der mindestens eine aus einer Folie hergestellte Schicht aus einem Kunststoffmaterial und eine auf mindestens einer Oberfläche der mindestens einen Folie aufgebrachte Bedruckung mit einer Tinte umfasst, wobei die aufgedruckte Tinte im Wesentlichen in Kavitäten angeordnet ist, die in der mindestens einen Oberfläche der die mindestens eine Schicht bildenden Folie ausgebildet sind, wobei die mindestens eine Folie mittels eines Gießverfahrens hergestellt ist, bei dem die Folie durch im Herstellungsprozess auftretende Prozessgase strukturiert ist und die mindestens eine Oberfläche durch austretende Prozessgase porös ausgestaltet ist. Hierdurch wird erreicht, dass die Tinte nicht auf einer glatten Oberfläche der Folie, wie es im Stand der Technik üblich ist, angeordnet wird oder ist, sondern ins Innere der Folie, das heißt, in eine poröse Oberfläche der Folie eindringt. Hierdurch wird sowohl eine bessere Lokalisierung der aufgedruckten Tinte, als auch eine bessere Laminationsfähigkeit der Oberfläche im Bereich der flächigen Bedruckung geschaffen. Die bessere Lokalisierung ergibt sich dadurch, dass die Tinte nicht auf der Oberfläche verläuft.

Bei einer bevorzugten Ausführungsform des Verfahrens wird die mindestens eine Folie mit mindestens einer weiteren Folie zu einem Dokumentenkörper mittels eines Laminationsverfahrens zusammengefügt, wobei auf die mindestens eine mittels der Tinte bedruckte Oberfläche der mindestens einen Folie die mindestens eine weitere Folie Folien laminiert wird. Ein entsprechendes Sicherheitsdokument weist einen Dokumentenkörper auf, bei dem eine an die mindestens eine Schicht angrenzende weitere Schicht, insbesondere aus demselben Kunststoffmaterial, vorhanden ist und die Bedruckung der mindestens einen Oberfläche der die mindestens eine Schicht bildenden Folie zumindest in einem lokalen Bereich flächig ausgebildet ist und dennoch das Kunststoffmaterial, der die mindestens eine Schicht bildende Folie mit dem Kunststoffmaterial, dass die weitere Schicht bildet, zu einem monolithischen Verbund flächig verbunden ist, wobei das Kunststoffmaterial der die mindestens eine Schicht bildenden Folie zumindest punktuell an mehreren Stellen verteilt über den lokal flächig bedruckten Bereich mit dem Kunststoffmaterial verbunden ist, das die weitere Schicht bildet. Es wird somit ein Sicherheitsdokument mit einem Dokumentenkörper hergestellt, bei dem die bedruckte Fläche keine durchgehende Druckschicht bildet, die als Trennschicht bei einer Lamination wirkt und so gegenüber einer Delamination anfällig ist. Somit wird es möglich in einem Sicherheitsdokument größere Bereiche flächig, beispielsweise vollfarbig zu bedrucken, indem eine Tinte oder mehrere verschiedene Tinten aufgebracht werden, die unterschiedliche Farbmittel umfassen.

Als Druckverfahren kommen insbesondere Hochdruck, insbesondere in der Ausprägung Letterset, Flachdruck, insbesondere in der Ausprägung Offsetdruck, Tiefdruck, insbesondere in den Ausprägungen Stichtiefdruck und Rastertiefdruck, Durchdruck, insbesondere in der Ausprägungsform Siebdruck, sowie Digitaldruck, insbesondere in den Ausprägungsformen Inkjet, Thermotransfer, Dye Diffusion Thermotransfer (D2T2) und Laserdruck, in Betracht. Besonders bevorzugt sind Inkjet, Thermotransfer und D2T2.

Um eine Verbindung der aufeinander laminierten Schichten zu verbessern, können die Oberfläche der mindestens einen Folie, die Oberfläche der hieran angrenzenden weiteren Folie oder beide einer Plasmabehandlung zur Aktivierung der Oberflächen unterzogen werden.

Bei einer weiteren Ausführungsform ist es vorgesehen, dass vor dem Bedrucken benachbart zu der mindestens einen Oberfläche der mindestens einen Folie in der Folie befindliche Kavitäten geöffnet werden. Dies kann beispielsweise durch eine flächige Laserablation oder auch durch ein mechanisches Abtragen von Material von der mindestens einen Oberfläche erfolgen. Hierdurch werden die zunächst geschlossenen Kavitäten, die bei der Herstellung, beispielsweise durch Prozessgase in der Folie gebildet werden, vor dem Bedrucken geöffnet, sodass diese verdruckte Tinte aufnehmen können.

Ein anderes Verfahren sieht vor, dass in die mindestens eine Oberfläche der mindestens einen Folie Kavitäten eingebracht werden, die zumindest lokal flächig in einem gleichmäßigen Raster oder lokal flächig stochastisch verteilt angeordnet sind oder werden. Bei einer Ausführungsform ist vorgesehen, dass Mikrokavitäten in einem regelmäßigen Muster in eine Folie eingebracht werden. Die hierbei erzeugten Kavitäten können unterschiedliche Querschnittsformen aufweisen. Diese können kreisförmig, oval oder auch stern- oder rauten- oder kreuzförmig ausgebildet sein. Es sind sowohl Ausführungsformen denkbar, bei denen alle in dem gleichmäßigen Muster angeordneten Kavitäten dieselbe Querschnittsform aufweisen oder das Muster Kavitäten mit unterschiedlichen Querschnittsformen aufweist. Wesentlich ist jedoch, dass die Kavitäten in die Oberfläche der mindestens einen Folie so eingebracht werden, dass hierüber keine Information kodiert wird. Vielmehr soll die mindestens eine Oberfläche so ausgebildet sein oder wird so ausgebildet, dass diese möglichst an jedem Ort eine gute Aufnahmefähigkeit für Tinte aufweist, sodass die Oberfläche flächig bedruckt werden kann, ohne durch die hierbei aufgebrachte Tinte eine durchgehende Trennschicht für einen nachfolgenden Laminationsschritt zu bilden.

Die Mikrokavitäten, die beispielsweise mittels eines Laserverfahrens eingebracht werden, können als Durchgangsöffnungen oder als Sacklöcher oder Sack-Kavitäten ausgebildet sein.

Die Kavitäten werden oder sind vorzugsweise so ausgebildet, dass zumindest ein mittleres Kavitätsvolumen und eine Viskosität der Tinte und eine Tinteauftragsmenge so aufeinander abgestimmt werden oder sind, dass der mindestens eine flächig bedruckte Bereich einen vorgegebenen Flächenanteil aufweist, an dem das Grundmaterial der Folie nicht mit Tinte überdeckt ist. Hierdurch wird in einem oder für einen nachfolgenden Laminationsschritt sichergestellt, dass auch im Bereich der flächigen Bedruckung eine zuverlässige Verbindung, der aneinander angrenzenden Folien erreicht wird. Der vorgegebene Flächenanteil beträgt vorzugsweise im Bereich von 30 bis 80 %, bevorzugt im Bereich von 50 bis 80 %, am bevorzugtesten im Bereich von 70 bis 80 %. Durch die Kavitätsform und das Kavitätsvolumen kann im Zusammenspiel mit der verwendeten Tinte, insbesondere deren Viskosität, erreicht werden, dass die Tinte über Kapillarkraft in die Kavität eindringt.

Eine anderes Verfahren sieht vor, dass bei der Herstellung der Folie in die Folie eine Mikrokavität aufweisende Stoffe eingefügt werden und/oder sind. Eine Mikrokavität aufweisende Stoffe sind beispielsweise Zeolithe, mesoporöse Stoffe, insbesondere MCM, Kohlenstoffnanoröhren (engl. Carbon nano tubes) oder Fullerene oder Röhrensilikate. Die Mikrokavitäten aufweisenden Stoffe können beispielsweise in Gießfolien, aber auch in extrudierte Folien eingebracht werden, beispielsweise indem die die Mikrokavitäten aufweisenden Stoffe dem zu extrudierendem Material bzw. dem Gießmaterial zugefügt werden. Bei Extrusionsverfahren, die als Mehrschichtextrusionsverfahren ausgebildet sind, ist es möglich, unterschiedlich Materialien in einem Schritt als eine Folie zu extrudieren. Hierdurch wird es möglich, dass die Kavitäten nur im Bereich der einen Oberfläche der extrudierten Folie angeordnet sind. Es versteht sich, für den Fachmann, dass auch Folien hergestellt werden können, die Kavitäten an einander gegenüberliegenden Oberflächen aufweisen, sodass die Folie auf beiden Seiten mit einer Tinte bedruckt werden kann.

Insbesondere wenn die Kavitäten nachträglich in eine bereits fertig ausgebildete Folie eingebracht werden, um eine poröse Oberfläche zu schaffen, beispielsweise mittels einer Laserablation, ist es vorteilhaft, nur in einem oder mehreren flächig begrenzten Druckbereichen Kavitäten auszubilden. Hierdurch kann beispielsweise vermieden werden, dass Staub oder andere Schmutzpartikel während der Fertigung in jenen Bereichen, die nicht bedruckt werden, in die Kavitäten eindringen und in einem anschließenden Laminationsschritt in den Dokumentenkörper mitintegriert werden. Außerdem werden die Kosten der Herstellung und die Fertigungszeiten verringert, wenn nur in einzelnen Bereichen Kavitäten eingearbeitet werden müssen.

Gemäß einer Ausführungsform ist vorgesehen, dass die mindestens eine Oberfläche ausbildende Seite der mindestens einen Folie aufgeraut wird oder ist, um die Kavitäten auszubilden.

Im Gegensatz zu mattierten Oberflächen von Folien sind die Kavitäten erfindungsgemäß mit einem Kavitätsvolumen ausgebildet, welche im Mittel ein vorgegebenes Kavitätsvolumen überschreiten. Dieses beträgt 20 bis 50 % des Volumens der Folie. Die Größe der einzelnen Kavität liegt bevorzugt im Bereich von 1 fl bis 1 µl, weiter bevorzugt im Bereich von 1 pl bis 1 µl, ganz besonders bevorzugt im Bereich 1 pl bis 10 nl.

Bei einem Verfahren wird die Folie aus in Suspension gebrachten und/oder angelösten Teilchen eines Basismaterials hergestellt, indem eine dünne Schicht aus einem Folienträger ausgebildet wird und die flüssigen Bestandteile verdampft werden, sodass die Teilchen des Basismaterials sich miteinander und gegebenenfalls mit dem Folienträger verbinden. Hierdurch entsteht eine durch das gesamte Volumen poröse Folie, sofern sich die Teilchen aus dem Basismaterial nur miteinander verbinden. Verbinden sich diese auch mit dem Folienträger, so besteht die Folie aus dem Folienträger und der darauf angeordneten porösen Schicht aus den miteinander verbundenen Teilchen. In diesem Fall ist der Folienträger vorzugsweise auf Basis desselben Basismaterials wie die Teilchen hergestellt, um bei einer Lamination eine gute, möglichst monolithische Schicht auszubilden.

Die Tinte wird vorzugsweise so aufgedruckt, dass diese in die Kavitäten eindringt und besonders bevorzugt nach dem Bedrucken im Wesentlichen in den Kavitäten angeordnet ist. Je nach Wahl der Tinte kann es vorteilhaft oder sogar erforderlich sein, einen Trocknungsschritt gegebenenfalls unter Einstrahlung von UV-Licht vorzunehmen.

Nachfolgend wird die Erfindung unter Bezugnahme auf eine Zeichnung näher erläutert. Hierbei zeigen:

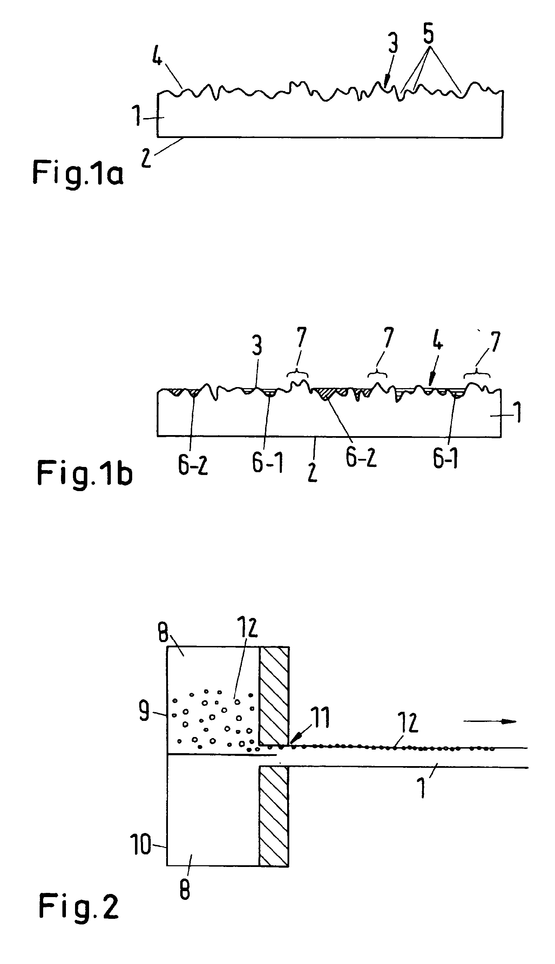

- Fig. 1a: eine schematische Querschnittsansicht einer Folie mit Kavitäten in einer Oberfläche;
- Fig. 1 b: die Folie nach Fig. 1 a im bedruckten Zustand im Querschnitt;
- Fig. 2: eine schematische Darstellung eines Extrusionsverfahrens, zum Erzeugen einer porösen Folie mit Kavitäten aufweisenden Teilchen an einer Oberfläche;
- Fig. 3: eine schematische Darstellung eines Querschnitts durch eine Folie mit eine Kavität aufweisenden Teilchen;
- Fig. 4a: eine schematische Ansicht einer mit nachträglich eingebrachten Kavitäten versehenen Folie im Querschnitt;
- Fig. 4b: eine schematische Ansicht der Folie nach Fig. 4a im bedruckten Zustand;
- Fig. 5a - 5l: schematische Draufsichten auf Folienoberflächen, die mit nachträglich in einem regelmäßigen Muster eingebrachten Kavitäten versehen sind, wobei sich die Querschnittsformen der Kavitäten der einzelnen Ausführungsformen unterscheiden;
- Fig. 6: eine schematische Darstellung eines Sicherheitsdokuments, bei dem die Kavitäten nur in einem Druckbereich eingebracht sind und ein Abstand der Kavitäten zu einem Randbereich des Druckbereichs hin zunimmt oder ein Durchmesser der Kavitäten zu einem Randbereich des Druckbereichs hin abnimmt;
- Fig. 7a: eine schematische Darstellung eines Sicherheitsdokuments, bei dem ein farbiges Gesicht auf einen Druckbereich aufgedruckt ist, in dem Mikrokavitäten angeordnet sind;
- Fig. 7b: eine schematische Schnittansicht eines Sicherheitsdokuments analog zu dem nach Fig. 7a;
- Fig. 8: eine schematische Darstellung einer Ansicht eines Sicherheitsdokuments, bei dem das Gesichtsbild mit einer Tinte gedruckt ist, die Fluoreszenzfarbmittel umfasst;
- Fig. 9: eine schematische Darstellung eines Verfahrens zum Herstellen einer Folie in einem Gießverfahren.
- Fig. 10: eine schematische Darstellung eines Verfahrens zur Herstellung einer Folie aus einer Suspension von Polymerpartikeln.

In Fig. 1a ist schematisch eine Folie 1 im Querschnitt ausschnittsweise dargestellt. Die Folie 1 weist eine glatte Unterseite 2 auf. Eine Oberfläche 3, die an der der Unterseite 2 gegenüberliegenden Oberseite 4 angeordnet ist, ist porös ausgestaltet. Die Oberfläche 3 weist eine Vielzahl von Mikrokavitäten 5 auf, von denen nur einige mit Bezugszeichen bezeichnet sind.

In Fig. 1b ist die Folie 1 nach Fig. 1 a im bedruckten Zustand dargestellt. Die Oberfläche 3 ist mit Tinte 6 bedruckt. Lokal sind unterscheidbare Tinten 6-1 und 6-2 verwendet, um eine Information, vorzugsweise vollfarbig unter Verwendung weiterer Tinten, aufzubringen. Der dargestellte Ausschnitt ist mit einer Tinte 6-1, welche im verdruckten Zustand einen ersten Farbeindruck hervorruft, und einer Tinte 6-2, welche im verdruckten Zustand einen zweiten, von dem ersten Farbeindruck verschiedenen Farbeindruck hervorruft, bedruckt. Die Tinten 6-1, 6-2 dringen hierbei jeweils in die Kavitäten 5 der Oberfläche 4 ein. Zwischen den mit Tinte 6-1, 6-2 gefüllten Kavitäten verbleiben Oberflächenanteile 7, die nicht mit Tinte 6-1, 6-2 bedeckt sind. Diese Oberflächenanteile 7 können in einem Laminationsschritt mit einer hierauf angebrachten weiteren Folie (nicht dargestellt) eine stabile Verbindung eingehen, so dass ein gegen Delamination im Bereich der Bedruckung gesicherter Dokumentenkörper herstellbar ist bzw. in einem weiteren Verfahrensschritt hergestellt wird.

Anhand von Fig. 2 soll schematisch ein Verfahren zum Herstellen einer Folie mit einer porösen Oberfläche 3 beschrieben werden. Basismaterial 8 für die herzustellende Folie 1 (gleiche technische Merkmale sind durch die Beschreibung mit demselben Bezugszeichen gekennzeichnet) wird in zwei voneinander getrennten Behältern 9, 10 erwärmt und unter Druck gesetzt, so dass das Basismaterial 8 durch eine gemeinsame Austrittsdüse 11 austritt und hierbei in eine Folie 1 extrudiert wird. Dem Basismaterial 8 in dem Behälter 9 sind Partikel 12 zugefügt, die definierte Hohlräume aufweisen bzw. definieren. Solche Partikel 12 können beispielsweise Zeolithe oder Fullerene sein. Auch andere, eine Kavität aufweisende Partikel können verwendet werden. Bei geeigneter Ausgestaltung ordnen sich diese einen Hohlraum bzw. eine Kavität aufweisenden Partikel 12 an einer Oberfläche 3 der Folie 1 an. Hierüber wird die Oberfläche 3 der Folie 1 porös ausgebildet.

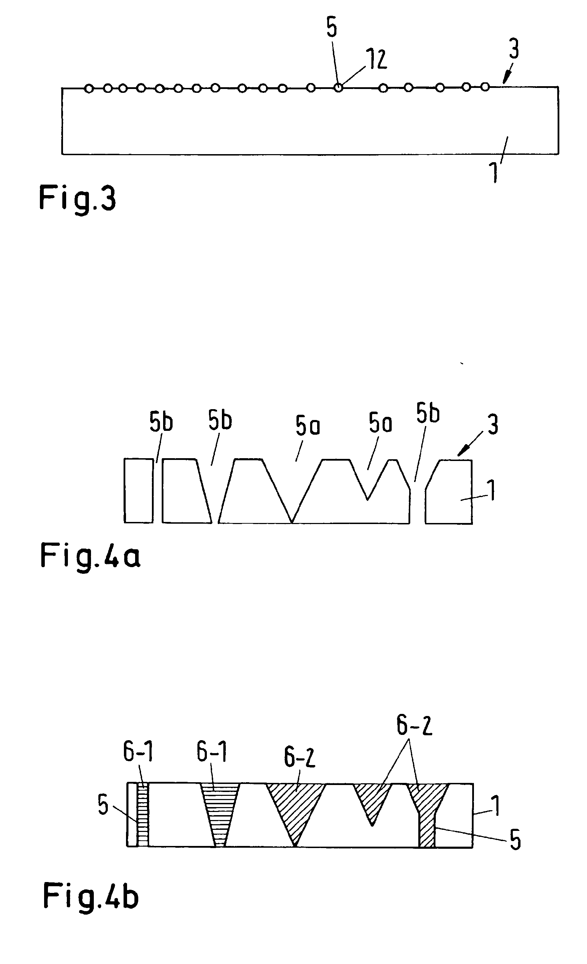

Schematisch ist eine solche poröse Folie 1 in Fig. 3 dargestellt. Zu erkennen ist, dass die Partikel 12 an der Oberfläche 3 angeordnet sind, so dass auf die Oberfläche 3 aufgedruckte Tinte in die Hohlräume bzw. Kavitäten 5 der Partikel 12 eindringen kann.

Bei einem anderen Verfahren werden die Kavitäten 5 beispielsweise über eine Laserablation in eine Folie eingebracht. Beispielhaft ist dies in Fig. 4a dargestellt. Wie zu erkennen ist, könnten die Kavitäten 5 unterschiedliche geometrische Formen aufweisen. Sie können sowohl als Sack-Kavitäten 5a oder als Durchgangsöffnungen 5b ausgebildet sein. Darüber hinaus können sie unterschiedliche Querschnittsformen sowohl in einer Ebene der Oberfläche 3 als auch senkrecht hierzu aufweisen. Vorzugsweise werden solche Kavitäten mit Excimerlasern erzeugt, die die Bindung der Polymere bei der Ablation aufbrechen. Ebenso ist es möglich CO₂-Laser zu verwenden, die eine thermische Ablation bewirken.

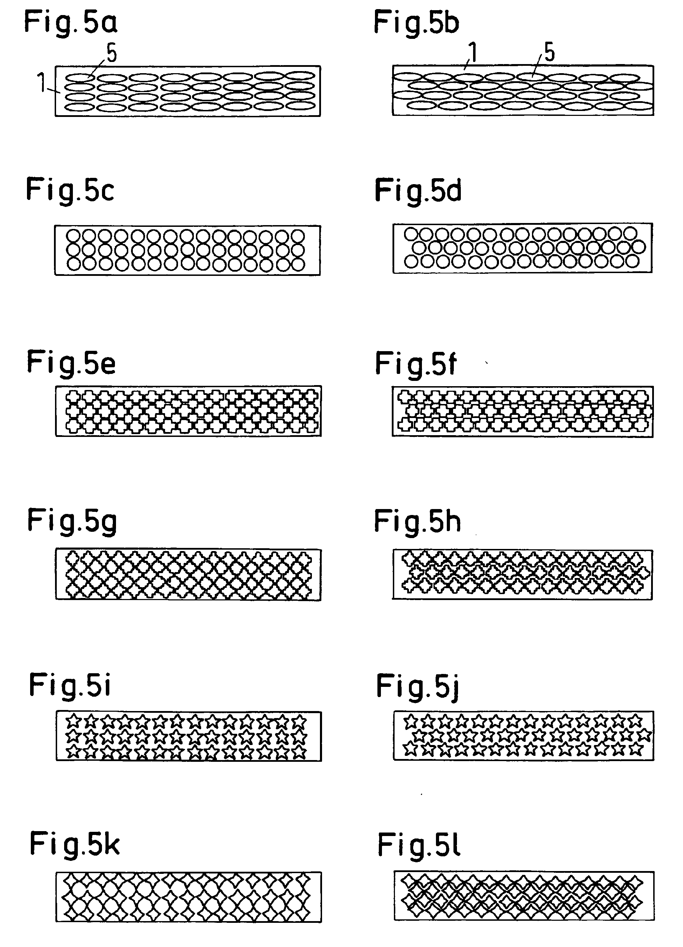

In den Fig. 5a - 5l sind Draufsichten auf Oberflächen 3 verschiedener Folien 1 gezeigt, in die jeweils Kavitäten, beispielsweise mittels Laserablation, eingebracht sind. Gut zu erkennen ist, dass die einzelnen Kavitäten 5 jeweils in einem regelmäßigen Muster angeordnet sind. Die verschiedenen Querschnittsformen oval (Fig. 5a, 5b), kreisförmig (Fig. 5c, 5d), kreuzförmig (Fig. 5e und 5f sowie 5g und 5h), sternförmig (Fig. 5i und 5j sowie 5k und 5l) können in einem regelmäßigen Zeilen- und Spaltenmuster (Fig. 5a, Fig. 5c, Fig. 5e, Fig. 5g, Fig. 5i und Fig. k) oder zeilenweise gegeneinander versetzt (Fig. 5b, Fig. 5d, Fig. 5f, Fig. 5h, Fig. 5j, Fig. 5l) angeordnet sein. Es versteht sich für den Fachmann, dass auch Kombinationen der dargestellten Querschnittsformen der Kavitäten in einer Oberfläche angeordnet werden oder sein können und ferner die Größen der Querschnittsflächen in einem Dokument variiert werden können. Bevorzugt werden Querschnittsflächen der Kavitäten im Bereich einiger Mikrometer bis einige hundert Mikrometer am bevorzugtesten im Bereich von zwanzig bis hundert Mikrometer gewählt.

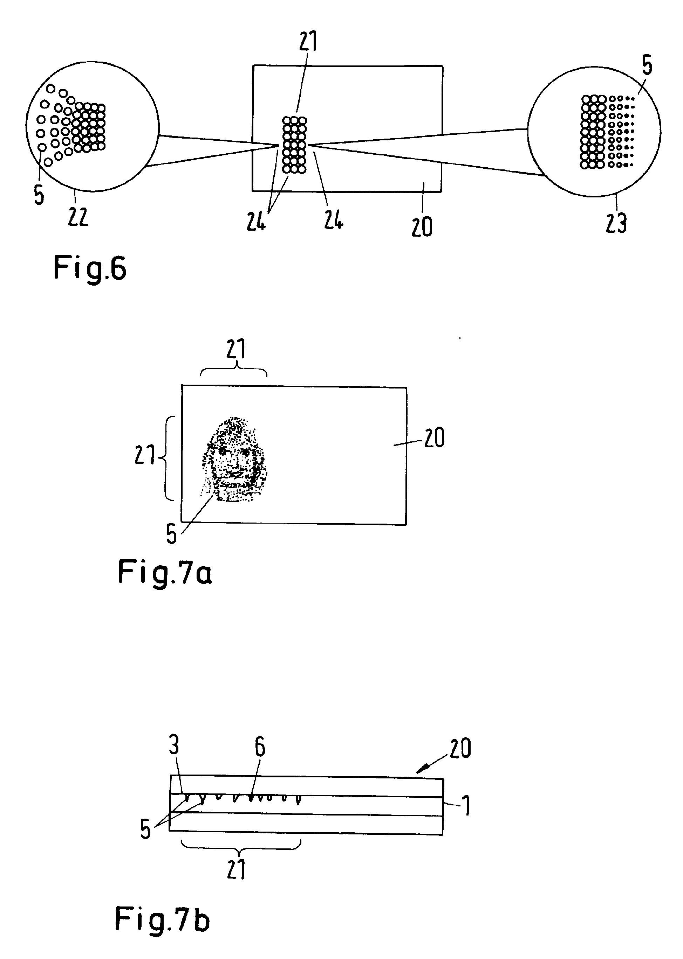

In Fig. 6 ist schematisch ein Sicherheitsdokument in Draufsicht dargestellt, bei dem Kavitäten nur in einem Druckbereich 21, dort jedoch lokal flächig in einem regelmäßigen Muster angeordnet sind, ohne hierüber eine Information zu kodieren. Lediglich zu den Randbereichen werden entweder die Abstände der einzelnen Kavitäten 5 vergrößert (s. Ausschnitt 22) oder die Durchmesser der Kavitäten 5 zum Rand hin verkleinert (s. Ausschnitt 23). Hierdurch wird der Flächenanteil, der beim Bedrucken nicht mit Tinte bedeckt wird, vergrößert, so dass insbesondere im Randbereich 24 eine Delaminationsneigung und/oder Delaminationsanfälligkeit deutlich reduziert wird.

In Fig. 7a ist ein Sicherheitsdokument 20 schematisch dargestellt, bei dem in dem Druckbereich 21 farbig ein Gesichtsbild aufgedruckt ist. Hierbei ist die Tinte im Wesentlichen in die Kavitäten 5 eingedrungen. In Fig. 7b ist ein Ausschnitt des Sicherheitsdokuments 20 nach Fig. 7a schematisch dargestellt.

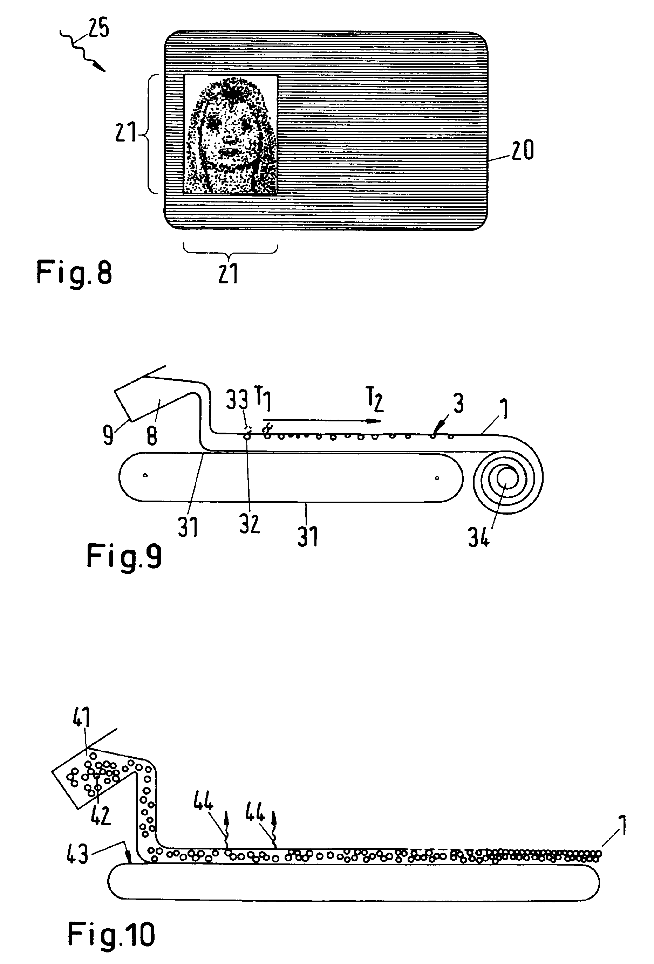

In Fig. 8 ist ein Sicherheitsdokument ähnlich zu dem nach Fig. 7a gezeigt, wobei das Gesichtsbild mit Tinten gedruckt ist, die Fluoreszenzfarbmittel enthalten. Beim Betrachten des Sicherheitsdokuments unter Licht im sichtbaren Wellenlängenbereich ist das Gesichtsbild nicht zu erkennen. Wird das Sicherheitsdokument 20 jedoch mit UV-Licht 25 angeregt, so ist das Gesichtsbild vollfarbig zu erkennen.

In Fig. 9 ist schematisch ein Verfahren zum Gießen einer Folie dargestellt, die durch austretende Prozessgase eine poröse strukturierte Oberfläche erhält. Basismaterial 8 wird aus einem Behälter 9 auf eine Transporteinrichtung 31 gegossen. Entlang der Transporteinrichtung 31 werden die Produktionsparameter kontrolliert, beispielsweise eine Temperatur. Dem Basismaterial 8 sind Zusatzstoffe zugefügt (nicht dargestellt), die zu einer Bildung von Prozessgas führen, welches in Form von Blasen 32 in dem gegossenen Film auf der Transporteinrichtung entsteht. Ist die Temperatur hoch genug, so steigen die Prozessgase zu der Oberfläche 3 und treten aus dieser aus. Dies ist durch gestrichelt dargestellte Blasen 33 angedeutet. Über eine geeignete Kontrolle der Temperatur beim Abkühlen des Basismaterials kann erreicht werden, dass ein Teil der durch das Prozessgas gebildeten Blasen 32 quasi eingefroren wird und so die Oberfläche 3 mit Kavitäten strukturiert wird und diese porös ausgebildet ist bzw. wird. Die fertige Folie 1 wird auf eine Rolle 34 aufgerollt.

In Fig. 10 ist ein Verfahren dargestellt, bei der eine Suspension 41 von Polymerteilchen 42, beispielsweise Polycarbonatpartikeln, auf einen Folienträger 43 aufgebracht wird. Anschließend werden alle Flüssigbestandteile 44 der Suspension 41 verdampft, so dass die zurückbleibenden Polycarbonatpartikel sich miteinander verbinden und eine poröse Folie 1 ausbilden. Ist eine Metallplatte als Folienträger 43 gewählt, trennt sich dieser von der Folie 1, die durchgehend porös ist. Die Polymerteilchen können in der Suspension teilweise angelöst sein, um ein Anhaften der Polymerteilchen aneinander beim Verdunsten der flüssigen Bestandteile 44 zu verbessern.

Es versteht sich für den Fachmann, dass nur beispielhafte Ausführungsformen dargestellt sind. Die in den einzelnen Ausführungsformen dargestellten bedruckten Folien werden in der Regel in einem weiteren Verarbeitungsschritt mit anderen weiteren Folien zu einem Dokumentenkörper zusammenlaminiert, so dass die in den Kavitäten befindliche Tinte in dem Dokumentenkörper sicher eingeschlossen wird, ohne dass eine Gefahr der Delamination durch eine geschlossene Tintenschicht, die als Trennschicht wirken könnte, bewirkt wird.

## Patentansprüche

1. Verfahren zur Herstellung eines Sicherheitsdokuments (20) umfassend die Schritte:
Bereitstellen und/oder Herstellen mindestens einer Folie (1) aus einem Kunststoffmaterial;
flächiges Bedrucken mindestens eines Bereichs mindestens einer Oberfläche der mindestens einen Folie (1) unter Verwendung von Tinte (6, 6-1, 6-2);
wobei die mindestens eine Folie (1) bereitgestellt und/oder hergestellt wird, so dass mindestens eine Oberfläche (3) Kavitäten (5) zum Aufnehmen der Tinte (6, 6-1, 6-2) erhält und/oder aufweist,
**dadurch gekennzeichnet, dass**
die mindestens eine Folie (1) mittels eines Gießverfahrens hergestellt wird oder ist,
bei dem die Folie (1) durch im Herstellungsprozess auftretende Prozessgase strukturiert wird und die mindestens eine Oberfläche (3) durch austretende Prozessgase porös ausgestaltet wird oder ist.

2. Verfahren nach Anspruch 1, **dadurch gekennzeichnet, dass**
die mindestens eine Folie (1) mit einer oder mehreren weiteren Folien zu einem Dokumentenkörper mittels eines Laminationsverfahrens zusammengefügt wird, wobei auf die mindestens eine mittels der Tinte (6, 6-1, 6-2) bedruckte Oberfläche (3) der mindestens einen Folie (1) die eine weitere Folie oder eine der mehreren Folien laminiert wird.

3. Verfahren nach Anspruch 1 oder 2, **dadurch gekennzeichnet, dass** zumindest ein mittleres Kavitätsvolumen und eine Viskosität der Tinte (6, 6-1, 6-2) und eine Tintenauftragsmenge so aufeinander abgestimmt werden, dass der mindestens eine flächig bedruckte Bereich mindestens einen vorgegebenen Flächenanteil aufweist, an dem das Grundmaterial der Folie (1) nicht mit der Tinte (6, 6-1, 6-2) überdeckt ist.

4. Verfahren nach einem der vorangehenden Ansprüche, **dadurch gekennzeichnet, dass** bei der Herstellung der Folie (1) in die Folie (1) eine Mikrokavität aufweisende Partikel (12) eingefügt werden und/oder sind.

5. Verfahren nach einem der vorangehenden Ansprüche, **dadurch gekennzeichnet, dass** die Tinte (6, 6-1, 6-2) so aufgedruckt wird, dass diese in die Kavitäten (5), vorzugsweise im Wesentlichen vollständig, eindringt.

6. Sicherheitsdokument (20) umfassend einen Dokumentenkörper, der mindestens eine aus einer Folie (1) hergestellte Schicht aus einem Kunststoffmaterial und eine auf mindestens eine Oberfläche (3) der die mindestens eine Schicht bildende Folie (1) aufgebrachte Bedruckung mit einer Tinte (6, 6-1, 6-2) umfasst,
wobei
die aufgedruckte Tinte (6, 6-1, 6-2) im Wesentlichen in Kavitäten (5) angeordnet ist, die in der mindestens einen Oberfläche (3) der die mindestens eine Schicht bildenden Folie (1) ausgebildet sind,
**dadurch gekennzeichnet, dass**
die mindestens eine Folie (1) mittels eines Gießverfahrens hergestellt ist, bei dem die Folie (1) durch im Herstellungsprozess auftretende Prozessgase strukturiert ist und die mindestens eine Oberfläche (3) durch austretende Prozessgase porös ausgestaltet ist.

7. Sicherheitsdokument (20) nach Anspruch 6, **dadurch gekennzeichnet, dass**
der Dokumentenkörper eine an die mindestens eine Schicht angrenzende weitere Schicht aus demselben Kunststoffmaterial umfasst und die Bedruckung der mindestens einen Oberfläche (3) der die mindestens eine Schicht bildenden Folie (1) zumindest in einem lokalen Bereich flächig ausgebildet ist und dennoch das Kunststoffmaterial der die mindestens eine Schicht bildenden Folie (1) mit dem Kunststoffmaterial, das die weitere Schicht bildet, zu einem monolithischen Verbund verbunden ist, wobei das Kunststoffmaterial der die mindestens eine Schicht bildenden Folie (1) zumindest punktuell an mehreren Stellen verteilt über den lokal flächig bedruckten Bereich mit dem Kunststoffmaterial verbunden ist, das die weitere Schicht bildet.

## Claims

1. Method for producing a security document (20) comprising the following steps: provision and / or production of at least one film (1) made of a plastic material; areal printing of at least one region of at least one surface of the at least one film (1) using ink (6, 6-1, 6-2); wherein the at least one film (1) is provided and / or produced such that the at least one surface (3) acquires and / or has cavities (5) for taking up the ink (6, 6-1, 6-2), **characterised in that** the at least one film (1) will be or is made by means of a casting process, in which the film (1) is structured by process gases arising in the manufacturing process and the at least one surface (3) will be or is made porous by escaping process gases.

2. Method according to claim 1, **characterised in that** the at least one film (1) is joined to one or multiple further films to form a document body by means of a lamination process, wherein the one further film or one of the multiple films is laminated onto the at least one surface (3) of the at least one film (1) printed with the ink (6, 6-1, 6-2).

3. Method according to claim 1 or 2, **characterised in that** at least one central cavity volume and one viscosity of the ink (6, 6-1, 6-2) and one ink application quantity are attuned to each other in such a way that the at least one areally printed region comprises at least one specified surface area on which the base material of the film (1) is not covered with the ink (6, 6-1, 6-2).

4. Method according to any one of the preceding claims, **characterised in that** in the production of the film (1) particles (12) comprising a micro-cavity will be and / or are inserted into the film.

5. Method according to any one of the preceding claims, **characterised in that** the ink (6, 6-1, 6-2) is applied in such a way that it penetrates the cavities (5), preferably substantially completely.

6. Security document (20) comprising a document body which comprises at least one layer made of a film (1) made of a plastic material, and comprises a printing with an ink (6, 6-1, 6-2) applied onto at least one surface (3) of the film (1) forming the at least one layer, wherein the ink applied (6, 6-1, 6-2) is arranged substantially in cavities (5) which are formed in the at least one surface (3) of the film (1) forming the at least one layer, **characterised in that** the at least one film (1) is produced by means of a casting process, in which the film (1) is structured by process gases arising in the manufacturing process and the at least one surface (3) is made porous by escaping process gases.

7. Security document (20) according to claim 6, **characterised in that** the document body comprises a further layer adjacent to the at least one layer, said further layer being made of the same plastic material, and the printing of the at least one surface (3) of the film (1) forming the at least one layer is formed areally at least in one local region and the plastic material of the film (1) forming the at least one layer is nevertheless connected to the plastic material which forms the further layer, to form a monolithic composite, wherein the plastic material of the film (1) forming the at least one layer is connected to the plastic material forming the further layer at least at points in multiple places spread over the locally areally printed region.

## Revendications

1. Procédé servant à fabriquer un document de sécurité (20), comprenant les étapes qui suivent consistant à :
fournir et/ou fabriquer au moins un film (1) à partir d'un matériau plastique ;
imprimer à plat au moins une zone d'au moins une surface du film (1) au moins au nombre de un en utilisant de l'encre (6, 6-1, 6-2) ;
sachant que le film (1) au moins au nombre de un est fourni et/ou fabriqué de sorte qu'au moins une surface (3) contient et/ou présente des cavités (5) servant à recevoir de l'encre (6, 6-1, 6-2),
**caractérisé en ce**
**que** le film (1) au moins au nombre de un est fabriqué au moyen d'un procédé de coulée, dans le cadre duquel le film (1) est structuré par des gaz de traitement se formant lors du processus de fabrication et où la surface (3) au moins au nombre de une est rendue poreuse ou est poreuse sous l'action des gaz de traitement se formant.

2. Procédé selon la revendication 1, **caractérisé en ce**
**que** le film (1) au moins au nombre de un est assemblé à un ou à d'autres films pour former un corps de document au moyen d'un procédé de stratification, sachant que l'autre couche ou une des nombreuses couches est stratifiée sur la surface (3) au moins au nombre de une, imprimée au moyen de l'encre (6, 6-1, 6-2), du film (1) au moins au nombre de un.

3. Procédé selon la revendication 1 ou 2, **caractérisé en ce qu'**au moins un volume de cavité moyen et une viscosité de l'encre (6, 6-1, 6-2) sont adaptés l'une à l'autre de telle manière que la zone au moins au nombre de une imprimée à plat présente une portion de surface prédéfinie, au niveau de laquelle le matériau de base du film (1) n'est pas recouvert d'encre (6, 6-1, 6-2).

4. Procédé selon l'une quelconque des revendications précédentes, **caractérisé en ce que** des particules (12) présentant une microcavité sont insérées et/ou se trouvent insérées dans le film (1) lors de la fabrication du film (1).

5. Procédé selon l'une quelconque des revendications précédentes, **caractérisé en ce que** l'encre (6, 6-1, 6-2) est appliquée par impression de telle manière qu'elle remplit les cavités (5), de préférence essentiellement complètement.

6. Document de sécurité (20) comprenant un corps de document, qui comprend au moins une couche, fabriquée à partir d'un film (1), constituée d'un matériau plastique et une impression avec une encre (6, 6-1, 6-2), laquelle impression est appliquée sur au moins une surface (3) du film (1) formant au moins une couche, sachant que l'encre (6, 6-1, 6-2) appliquée par impression est disposée essentiellement dans des cavités (5), qui sont réalisées dans la surface (3) au moins au nombre de une du film (1) formant la couche au moins au nombre de une,
**caractérisé en ce**
**que** le film (1) au moins au nombre de un est fabriqué au moyen d'un procédé de coulée, dans le cadre duquel le film (1) est structuré par des gaz de traitement se formant lors du procédé de fabrication, et en ce que la surface (3) au moins au nombre de une est configurée de manière poreuse par des gaz de traitement se formant.

7. Document de sécurité (20) selon la revendication 6, **caractérisé en ce que** le corps de document comprend une autre couche, adjacente à la couche au moins au nombre de une, constituée du même matériau plastique, et **en ce que** l'impression de la surface (3) au moins au nombre de une du film (1) formant la couche au moins au nombre de une est réalisée à plat au moins dans une zone locale, et **en ce que** néanmoins le matériau plastique du film (1) formant la couche au moins au nombre de une est relié au matériau plastique, qui forme l'autre couche, pour former un composite monolithique, sachant que le matériau plastique du film (1) formant la couche au moins au nombre de une est relié, par l'intermédiaire de la zone imprimée à plat localement, au matériau plastique, lequel forme l'autre couche, en étant réparti au moins de manière ponctuelle en plusieurs emplacements.
